# EUROPÄISCHE PATENTSCHRIFT

(11) **EP 1 192 736 B1**
(45) Veröffentlichungstag und Bekanntmachung des Hinweises auf die Patenterteilung: **05.11.2003**
(21) Anmeldenummer: 00954309.1
(22) Anmeldetag: 04.07.2000
(51) Int. Cl.: H04B 7/005

(54) **VERFAHREN ZUR SENDELEISTUNGSREGELUNG IN EINEM FUNK-KOMMUNIKATIONSSYSTEM**
METHOD FOR CONTROLLING THE TRANSMITTING POWER IN A RADIO COMMUNICATIONS SYSTEM
PROCEDE DE REGULATION DE LA PUISSANCE D'EMISSION DANS UN SYSTEME DE RADIOCOMMUNICATION

(30) Priorität: 13.07.1999 DE 19932687
(43) Veröffentlichungstag der Anmeldung: 03.04.2002
(73) Patentinhaber: SIEMENS AKTIENGESELLSCHAFT, 80333 München (DE)
(72) Erfinder: DILLINGER, Markus, D-81737 München (DE); OSTERMAYER, Gerald, A-1160 Wien (AT)
(86) Internationale Anmeldenummer: DE0002178
(87) Internationale Veröffentlichungsnummer: WO01005054

(56) Entgegenhaltungen:
- WO-A-99/18702
- SAMPATH A ET AL: "ON SETTING REVERSE LINK TARGET SIR IN A CDMA SYSTEM" PHOENIX, MAY 4 - 7, 1997,NEW YORK, IEEE,US, Bd. CONF. 47, 4. Mai 1997 (1997-05-04), Seiten 929-933, XP000736744 ISBN: 0-7803-3660-7

## Beschreibung

Die Erfindung betrifft ein Verfahren zur Sendeleistungsregelung in einem Funk-Kommunikationssystem, insbesondere in einem Mobilfunksystem.

In Funk-Kommunikationssystemen, beispielsweise dem europäischen Mobilfunksystem der zweiten Generation GSM (Global System for Mobile Communications), werden Informationen wie beispielsweise Sprache, Bildinformation oder andere Daten mit Hilfe von elektromagnetischen Wellen über eine Funkschnittstelle übertragen. Die Funkschnittstelle bezieht sich auf eine Verbindung zwischen einer Basisstation und einer Vielzahl von Teilnehmerstationen, wobei die Teilnehmerstationen beispielsweise Mobilstationen oder ortsfeste Funkstationen sein können. Das Abstrahlen der elektromagnetischen Wellen erfolgt dabei mit Trägerfrequenzen, die in einem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen. Für die dritte Mobilfunkgeneration UMTS sind zwei Modi vorgesehen, wobei ein Modus einen FDD-Betrieb (Frequency Division Duplex) und der andere Modus einen TDD-Betrieb (Time Division Duplex) bezeichnet. Diese Modi finden ihre Anwendung in unterschiedlichen Frequenzbändern, wobei beide Modi ein sogenanntes CDMA-Teilnehmerseparierungsverfahren (Code Division Multiple Access) unterstützen.

In Mobilfunksystemen, die eine auf einem CDMA-Verfahren basierende Teilnehmerseparierung nutzen, ist eine schnelle Leistungsregelung insbesondere der mobilen Funkstationen notwendig, um einen gesicherten Empfang aller bestehenden Kommunikationsverbindungen am Ort der Basisstation bei einer gleichzeitigen geringen Interferenzstörung von Nachbarübertragungskanälen sicherzustellen. Die schnelle Sendeleistungsregelung ist insbesondere für Echtzeit-Dienste wie Sprachübertragung bei niedrigen Geschwindigkeiten erforderlich. Für dem FDD-Modus wird nach dem Stand der Technik, wie er beispielsweise in dem Dokument ARIB "Japan's Proposal for Candidate Radio Transmission Technology on IMT-2000:W-CDMA", June 1998, Japan, S. 39 bis 42, offenbart ist, eine schnelle Sendeleistungsregelung basierend auf einer geschlossenen und offenen Regelschleife realisiert. Der Einsatz der offenen oder geschlossenen Regelschleife hängt dabei von einem Typ des jeweiligen Übertragungskanals ab. Die schnelle geschlossene Regelschleife basiert auf sogenannten TPC bits (Transmitter Power Control), die periodisch von der jeweils kontrollierenden Einrichtung des Funk-Kommunikationssystems zu der anderen Einrichtung signalisiert werden. Eine Basisstation steuert somit die Sendeleistung der Teilnehmerstation und umgekehrt.

Ein derartiges Prinzip der Sendeleistung soll zum Zwecke einer Harmonisierung zwischen den beiden Modi des UMTS-Mobilfunksystems prinzipiell auch für den TDD-Modus eingesetzt werden. Simulationen jedoch haben ergeben, daß beispielsweise bei einer Geschwindigkeit der Teilnehmerstation von größer 10 km/h eine schnelle Sendeleistungsregelung keinen Gewinn hinsichtlich einer Interferenzsituation am Ort der empfangenden Funkstation mehr bewirkt, sondern im Gegenteil sogar nachteilig wirken kann. Das gleiche Ergebnis trifft auch für den FDD-Modus zu.

Aus WO 99/18702 ist ein Verfahren zur Leistungsregelung bekannt, bei dem eine innere Schleife anhand einer gemessenen Übertragungsqualität die Sendeleistung erhöht beziehungsweise erniedrigt, wobei eine äußere Schleife Schwellwerte für die Signalqualität festlegt.
Sowohl die innere als auch die äußere Schleife sind als ein gemeinsamer Block bei der Basisstation und/oder beim Teilnehmer angeordnet.

Aus Sampath A. et al.: "On settings reverse link target SIR in a CDMA System" Phoenix, May 4-7, 1997. New York, IEEE, US, Bd.Conf.47, 4. Mai 1997 (1997-05-04), Seiten 929-933, XP000736744 ISBN:0-7803-3660-7 ist ein Verfahren zur Leistungsregelung bekannt, bei dem ein Teilnehmer von einer Basisstation aufgefordert wird, seine Sendeleistung anzupassen, wobei diese Aufforderung auf einem gemessenen Signal-to-Interference-Ratio-Wert (SIR) basiert.
Der Regelkreis selbst besteht aus einer inneren Schleife und einer äußeren Schleife, wobei die innere Schleife die Leistungsregelung ausführt und die äußere Schleife verantwortlich ist für das Setzen bzw. Festlegen eines Wertes, der dem SIR-Wert entspricht. Die äußere Schleife setzt die Zielwerte für die innere Schleife.

Der Erfindung liegt die Aufgabe zugrunde, ein Verfahren anzugeben, das in einem Funk-Kommunikationssystem eine verbesserte Sendeleistungsregelung bei einer Vermeidung der beschriebenen Nachteile des bekannten Verfahrens zur Sendeleistungsregelung ermöglicht. Diese Aufgabe wird durch das Verfahren mit den Merkmalen des Anspruchs 1 gelöst. Vorteilhafte Weiterbildungen der Erfindung sind den Unteransprüchen zu entnehmen.

Erfindungsgemäß wird die Sendeleistung einer Funkstation mittels einer inneren Regelschleife für eine schnelle Sendeleistungsregelung innerhalb eines von einer äußeren Regelschleife für eine langsame Sendeleistungsregelung vorgegebenen Sendeleistungsintervall variiert. Diese Regelung kann sowohl für eine Teilnehmerstation als auch für eine Basisstation des Funk-Kommunikationssystems durchgeführt werden.

Das erfindungsgemäße Verfahren ermöglicht vorteilhaft, daß durch eine Dimensionierung des Sendeleistungsintervalls der äußeren Regelschleife ein Übergang beispielsweise von einer schnellen zu einer langsamen Sendeleistungsregelung durchgeführt werden kann, um beispielsweise bei höheren Geschwindigkeiten der Teilnehmerstation eine Sendeleistungsregelung mittels der langsamen äußeren Regelschleife zu verwirklichen, währenddessen bei niedrigen Geschwindigkeiten der Teilnehmerstation die schnelle innere Regelschleife verwendet wird. In diesem beispielhaften Fall nimmt der Einfluß der langsamen Sendeleistungsregelung auf die schnelle Sendeleistungsregelung mit zunehmender Geschwindigkeit der Teilnehmerstation zu, bis ein Punkt erreicht ist, an dem das Sendeleistungsintervall zu null wird. Ab diesem Punkt wird die Sendeleistung ausschließlich durch die langsame Sendeleistungsregelung bestimmt. Vorteilhaft kann dieses Verfahren beispielsweise sowohl in dem TDD- als auch in dem FDD-Modus des UMTS-Mobilfunksystems eingesetzt werden.

Ausführungsbeispiele der Erfindung werden anhand der beiliegenden Zeichnungen näher erläutert.

Dabei zeigen
- FIG 1: ein Blockschaltbild eines Funk-Kommunikationssystems, insbesondere eines Mobilfunksystems,
- FIG 2: eine schematische Darstellung der Struktur einer TDD-Funkschnittstelle,
- FIG 3: eine schematische Darstellung der Signalisierungen zwischen einer Teilnehmerstation UE und einer Basis-station NB bei einer erfindungsgemäßen Sendeleistungsregelung,
- FIG 4: ein Blockschaltbild einer beispielhaften Realisierung der inneren und äußeren Regelschleife in einer Sende/Empfangseinrichtung einer Basisstation bzw. Teilnehmerstation,
- FIG 5: eine Darstellung des Zusammenhangs zwischen dem Gewichtungsfaktör d, einem ermittelten charakteristischen Wert BER und einem Signal-Interferenzverhältnis CIR bezugnehmend auf die äußere Regelschleife der FIG 4, und
- FIG 6: eine beispielhafte Dimensionierung von Sendeleistungsintervallen für mehrere Teilnehmerstationen innerhalb eines bestimmten Dynamikbereichs.

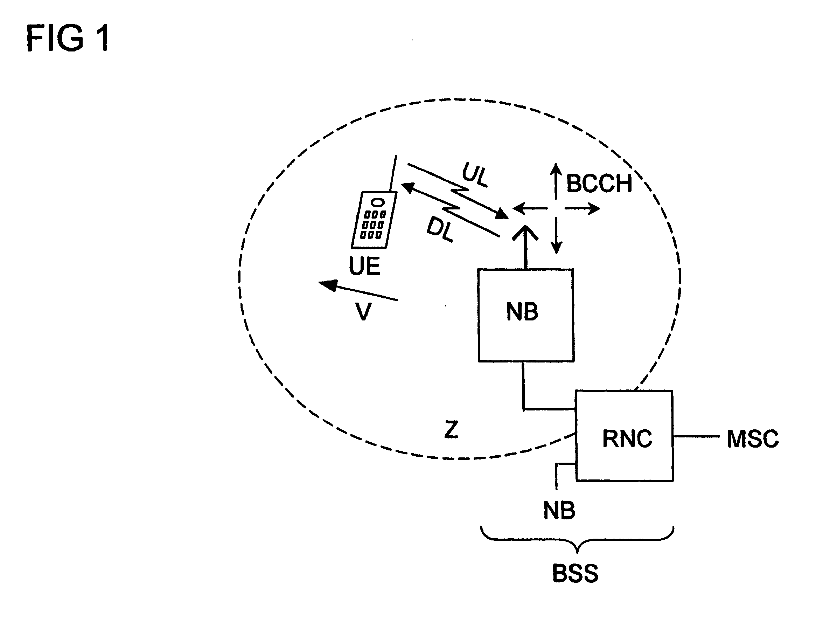

Die FIG 1 zeigt einen Teil eines Mobilfunksystems als Beispiel für die Struktur eines Funk-Kommunikationssystems. Ein Mobilfunksystem besteht jeweils aus einer Vielzahl von Mobilvermittlungsstellen MSC, die zu einem Vermittlungsnetz (SSS - Switching Subsystem) gehören und untereinander vernetzt sind bzw. den Zugang zu einem Festnetz herstellen, und aus jeweils einem oder mehreren mit diesen Mobilvermittlungsstellen MSC verbundenen Basisstationssystemen BSS (BSS - Base Station Subsystem). Ein Basisstationssystem BSS weist wiederum zumindest eine Einrichtung RNC (RNC - Radio Network Controller) zum Zuweisen von funktechnischen Ressourcen sowie zumindest eine jeweils damit verbundene Basisstation NB (NB - Node B) auf. Eine Basisstation NB kann über eine Funkschnittstelle Verbindungen zu Teilnehmerstationen UE (UE - User Equipment), wie z.B. Mobilstationen oder anderweitige mobile und stationäre Endgeräte, aufbauen. Durch jede Basisstation NB wird zumindest eine Funkzelle Z gebildet. Die Größe der Funkzelle wird in der Regel durch die Reichweite eines allgemeinen Signalisierungskanals (BCCH - Broadcast Control Channel), der von den Basisstationen NB1, NB2 mit einer jeweils maximalen und konstanten Sendeleistung gesendet wird, bestimmt. Bei einer Sektorisierung oder bei hierarchischen Zellstrukturen können pro Basisstation NB auch mehrere Funkzellen versorgt werden. Die Funktionalität dieser Struktur ist auf andere Funk-Kommunikationssysteme übertragbar, in denen die Erfindung zum Einsatz kommen kann.

Das Beispiel der FIG 1 zeigt eine Teilnehmerstation UE, die als eine Mobilstation ausgestaltet ist, und die sich mit einer Geschwindigkeit V in der Funkzelle Z der Basisstation NB bewegt. Die Teilnehmerstation UE hat eine Verbindung zu der Basisstation NB aufgebaut, auf der in Aufwärts- UL und Abwärtsrichtung DL eine Signalübertragung eines gewählten Dienstes erfolgt. Während der Verbindung wertet die Teilnehmerstation UE periodisch Ubertragungseigenschaften der Funkschnittstelle zu der sie versorgenden Basisstation sowie zu weiteren die Teilnehmerstation UE umgebenden Basisstationen NB aus, um bei einer Verschlechterung der Übertragungsqualität eine Erhöhung der Sendeleistung von der Basisstation NB oder beispielsweise eine Verbindungsweiterschaltung zu einer benachbarten Basisstation anzufordern. Gleiches gilt bei einer Verbesserung der Ubertragungsqualität, bei der eine mögliche Erniedrigung der Sendeleistung signalisiert wird, um die Interferenz in der Funkzelle zu minimieren.

Die Steuerung der Sendeleistung der Basisstation NB führt die Teilnehmerstation UE mittels von Signalisierungsnachrichten durch, in denen sie beispielsweise eine gemessene Variation der Übertragungseigenschaften durch eine Angabe einer Variation eines charakteristischen Wertes BER oder dessen über ein Zeitintervall gemittelten Mittelwert BERavg angibt. Als Zeitintervall für die Mittelwertbildung kann beispielsweise die Periodizität des äußeren Regelkreises Outer Loop gewählt werden. Als charakteristischer Wert BER wird beispielsweise eine Bitfehlerrate, eine Zeitrahmenfehlerrate, eine Pfaddämpfung, eine Interferenzsituation am Ort der Teilnehmerstation UE sowie Kombinationen dieser Parameter werden. Die Variation des charakteristischen Wertes BER kann ergänzend oder alternativ auch anhand des mit einer konstanten Sendeleistung gesendeten allgemeinen Signalisierungskanal BCCH ermittelt werden. Ein gleiches Verfahren zur Steuerung der Sendeleistung der Teilnehmerstation UE führt die Basisstation NB durch. Nach einer entsprechenden Auswertung der Ubertragungseigenschaften signalisiert sie der Teilnehmerstation UE eine Erhöhung oder Erniedrigung der Sendeleistung. Diese Signalisierung erfolgt gemäß dem einleitend genannten Stand der Technik für den FDD-Modus der ARIB beispielsweise durch ein spezifisches TPC-bit (Transmitter Power Control).

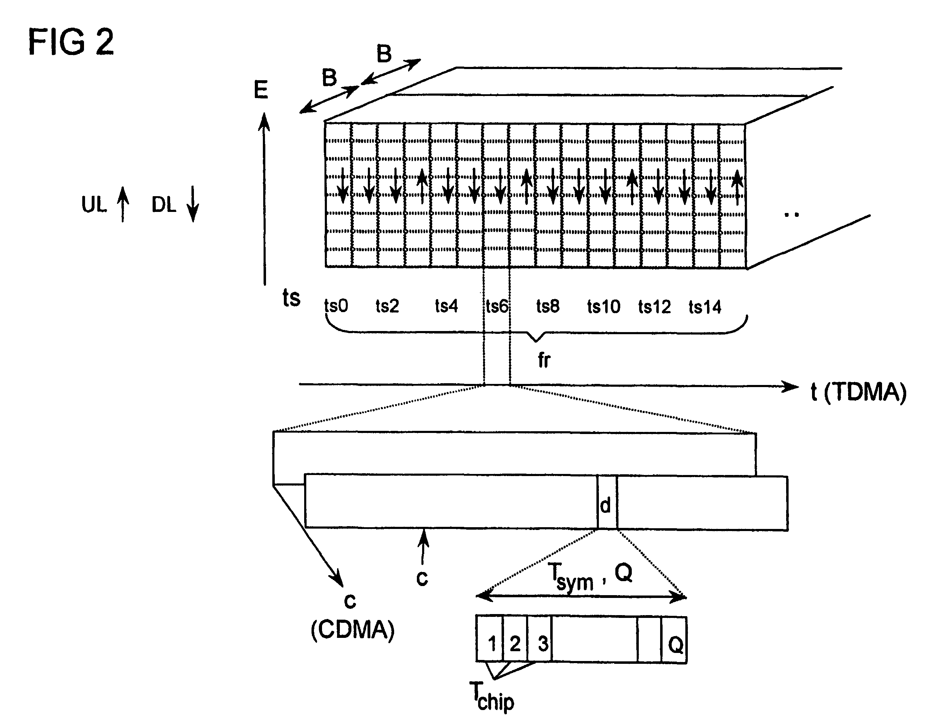

Die Rahmenstruktur der Funkübertragung im TDD-Modus des UMTS-Mobilfunksystems, in der das erfindungsgemäße Verfahren vorteilhaft einsetzbar ist, ist aus der FIG 2 ersichtlich. Gemäß einer TDMA-Komponente (time division multiple access) ist eine Aufteilung eines breitbandigen Frequenzbereiches in mehrere Zeitschlitze ts gleicher Zeitdauer, beispielsweise 16 Zeitschlitze ts0 bis ts1b vorgesehen, die einen Zeitrahmen fr bilden. Ein Frequenzband B erstreckt sich über einen bestimmten Frequenzbereich. Ein Teil der Zeitschlitze wird für die Signalübertragung in Abwartsrichtung DL und ein Teil der Zeitschlitze in Aufwärtsrichtung UL genutzt. Beispielhaft ist ein Asymmetrieverhältnis von 3:1 zugunsten der Abwärtsrichtung DL gezeigt. Bei diesem TDD-Übertragungsverfahren entspricht das Frequenzband B für die Aufwärtsrichtung UL dem Frequenzband B für die Abwärtsrichtung DL. Gleiches wiederholt sich für weitere Trägerfrequenzen. Durch die variable Zuordnung der Zeitschlitze ts für Auf- oder Abwärtsrichtung UL, DL können vielfältige asymmetrische Ressourcenzuteilungen vorgenommen werden.

Innerhalb der Zeitschlitze ts werden Informationen mehrerer Verbindungen in Funkblöcken übertragen. Die Daten d sind verbindungsindividuell mit einer Feinstruktur, einem Spreizkode c, gespreizt, so daß empfangsseitig beispielsweise n Verbindungen durch diese CDMA-Komponente (code division multiple access) separierbar sind. Die Spreizung von einzelnen Symbolen der Daten d bewirkt, daß innerhalb der Symboldauer T_{sym} Q Chips der Dauer T_{chip} übertragen werden. Die Q Chips bilden dabei den verbindungsindividuellen Spreizkode c.

Die verwendeten Parameter der Funkschnittstelle für beide Übertragungsmodi sind vorteilhafterweise:

| | |
|---|---|
| Chiprate | 4.096 Mcps |
| Rahmendauer | 10 ms |
| Anzahl Zeitschlitze | 16 |
| Dauer eines Zeitschlitzes | 625 µs |
| Chips pro Zeitschlitz | 2560 |
| Spreizfaktor | variabel |
| Modulationsart | QPSK |
| Bandbreite | 5 MHz |
| Frequenzwiederholungswert | 1 |

Diese Parameter ermöglichen eine bestmögliche Harmonisierung des TDD- und des FDD-Modus für die 3. Mobilfunkgeneration.

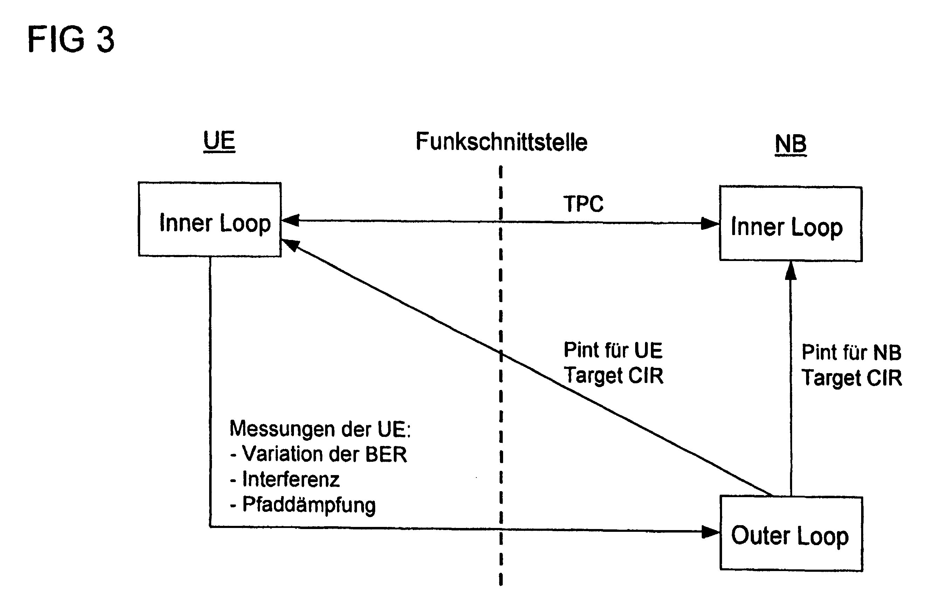

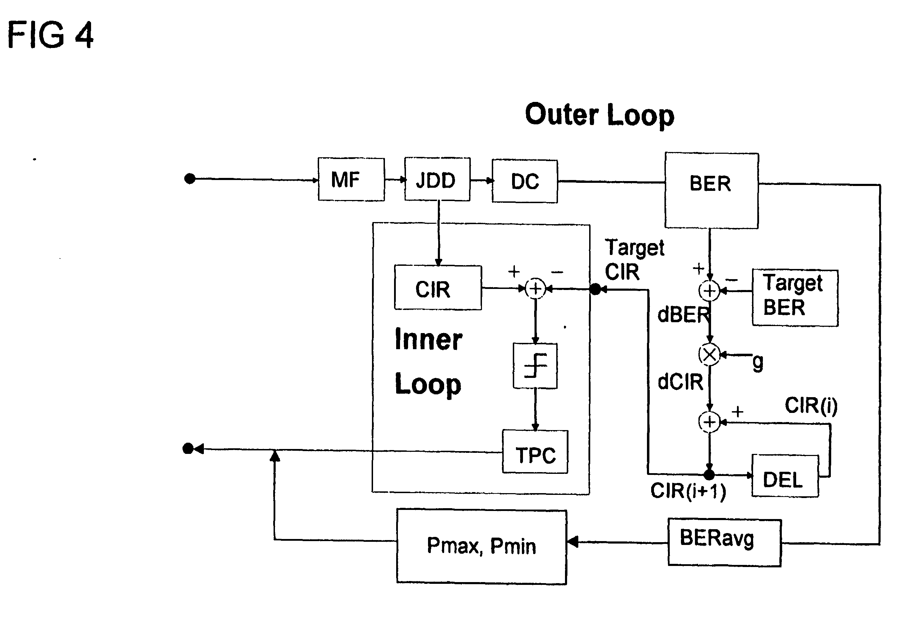

In der FIG 3 sind beispielhaft die Signalisierungen zwischen der Teilnehmerstation UE und der Basisstation NB bei der Ausführung des erfindungsgemäßen Verfahrens dargestellt. Wie nachfolgend auch zu der FIG 4 erläutert, wird die äußere Regelschleife Outer Loop in der Basisstation NB sowohl für die Sendeleistungsregelung der Basisstation NB als auch für die Sendeleistungsregelung der Teilnehmerstation UE genutzt.

Die Teilnehmerstation UE führt Messungen bezüglich der Übertragungseigenschaften der Funkschnittstelle bei der Signalübertragung in der etablierten Verbindung zu der Basisstation NB durch. Diese Messungen betreffen, wie bereits zu der FIG 1 beschrieben, beispielsweise eine Ermittlung einer Variation des charakteristischen Wertes BER über ein bestimmtes Zeitintervall, eine Interferenzsituation am aktuellen Aufenthaltsort der Teilnehmerstation UE und/oder eine ermittelte Pfaddampfung. Die Pfaddämpfung wird beispielsweise mittels des allgemeinen Signalisierungskanals BCCH bestimmt, da die Teilnehmerstation UE im Regelfall in Kenntnis der Sendeleistung dieses Kanals ist. Die Interferenz sowie die Pfaddämpfung können entsprechend dem charakteristischen Wert BER über ein Zeitintervall gemittelt und die jeweiligen Mittelwerte zu der Basisstation NB signalisiert werden, wo sie in der äußeren Regelschleife Outer Loop ausgewertet werden.

In der äußeren Regelschleife Outer Loop der Basisstation NB wird entsprechend dem erfindungsgemäßen Verfahren neben einer mittleren Sendeleistung ein jeweiliges Sendeleistungsintervall Pint sowie ein Zielwert eines Signal-Interferenz-Verhältnisses Target CIR für die Basisstation NB und die Teilnehmerstation UE ermittelt und jeweils signalisiert. Der Zielwert des Signal-Interferenz-Verhältnisses Target CIR stellt eine ausreichende Übertragungsqualität sicher und muß entsprechend den aktuellen Übertragungsbedingungen angepaßt werden. Innerhalb des ermittelten und signalisierten Sendeleistungsintervalls Pint kann die jeweilige innere Regelschleife eine schnelle Sendeleistungsregelung ausführen. Diese schnelle Sendeleistungsregelung erfolgt über die erwähnten TPC-bits, die jeweils eine Erhöhung oder Erniedrigung der Sendeleistung um einen bestimmten Wert in dB bewirken. Das Sendeleistungsintervall Pint kann als Absolutangabe oder als Angabe einer maximalen Sendeleistung Pmax und einer minimalen Sendeleistung Pmin bzw. als relativer Wert zu der mittleren Sendeleistung signalisiert werden.

In der FIG 4 ist beispielhaft eine Realisierung der erfindungsgemäßen Kombination einer inneren- Inner Loop und äußeren Regelschleife Outer Loop in einer Sende/Empfangseinrichtung der Basisstation NB oder auch der Teilnehmerstation UE angegeben. Die Struktur entspricht grundsätzlich der Struktur der Fig. 3.5-5, Seite 40, des genannten Standes der Technik der ARIB. Die empfangenen Signale werden in einem sogenannten Matched Filter MF gefiltert und einer Detektoreinrichtung JDD zugeführt. In dem Beispiel ist die Detektoreinrichtung JDD als ein bekannter Joint-Detection-Detector ausgestaltet. Diese Detektoreinrichtung JDD weist einen nur begrenzten Dynamikbereich auf, innerhalb dessen er parallel durch Spreizkodes getrennte Signale mehrerer Quellen detektieren kann. Unter anderem aus diesem Grund muß die Sendeleistung der verschiedenen Quellen sehr genau erfolgen, um eine Überschreitung dieses Dynamikbereiches und somit die Degradierung der Empfangsqualität für alle parallelen Verbindungen zu vermeiden.

Aus den detektierten Signalen wird in der inneren Regelschleife Inner Loop ein Signal-Interferenz-Verhältnis CIR ermittelt. Das Signal-Interferenz-Verhältnis CIR dient sowohl der schnellen als auch der langsamen Sendeleistungsregelung als Basis für eine optimale Sendeleistungsregelung, da die Interferenzsituation am Empfänger das wichtigste Kriterium für einen gesicherten Empfang der Signale darstellt.

In einer der Detektoreinrichtung JDD nachgeschalteten Dekodiereinrichtung DC werden die empfangenen Signale dekodiert und ein jeweiliger charakteristischer Wert BER ermittelt. Dieser charakteristische Wert BER wird anschließend in der äußeren Regelschleife Outer Loop mit einem Zielwert für den charakteristischen Wert Target BER verglichen und eine Differenz dBER der beiden Werte berechnet. Die Differenz wird anschließend durch einen Gewichtungsfaktor g gewichtet und zu einem Zielwert für das Signal-Interferenz-Verhältnis CIR(i) eines vorangehenden Regelintervalls i addiert. Der hierdurch entstehende ektuelle Zielwert für das Signal-Interferenz-Verhältnis CIR(i+1) bzw. Target CIR wird in gleicher Weise mittels einer Verzögerungseinrichtung DEL verzögert und anschließend für die Berechnung des nachfolgenden Zielwertes berücksichtigt. Der aktuelle Zielwert Target CIR dient der schnellen Sendeleistungsregelung in der inneren Regelschleife Inner Loop als Basis für eine Erhöhung oder Erniedrigung der Sendeleistung durch eine Signalisierung von TPC-bits.

In einer weiteren Einrichtung der äußeren Regelschleife Outer Loop wird eine Mittelwertbildung des charakteristischen Wertes BER durchgeführt. Die Mittelwertbildung kann dabei beispielsweise über ein Zeitintervall von 50ms bis 5s für das beispielhafte UMTS-Mobilfunksystem erfolgen. Dieses Zeitintervall definiert die Periodizität für die Sendeleistungsregelung des äußeren Regelkreises. Die schnelle Sendeleistungsregelung erfolgt nach dem genannten Stand der Technik mit einer Periodizität von 0,625ms. Aus dem Mittelwert BERavg des charakteristischen Wertes BER kann eine Variation der Übertragungseigenschaften der Funkschnittstelle ermittelt werden, wobei die Variation beispielsweise durch eine Bewegung der Teilnehmerstation UE mit einer bestimmten Geschwindigkeit V verursacht wird. Abhängig von der Variation werden nachfolgend eine mittlere Sendeleistung sowie eine hierzu relative maximale Sendeleistung Pmax und eine minimale Sendeleistung Pmin definiert. Innerhalb dieses Sendeleistungsintervalls Pint kann die innere Regelschleife Inner Loop eine schnelle Sendeleistungsregelung ausführen.

Die Dimensionierung der maximalen Pmax und minimalen Sendeleistung Pmin kann periodisch entsprechend dem Zeitintervall zur Mittelwertbildung oder für den Fall, daß die Variation einen vorgegebenen Schwellwert unterschreitet, erfolgen. Mit einer kleiner werdenden Variation des charakteristischen Wertes BER über das Zeitintervall wird entsprechend das Sendeleistungsintervall Pint verkleinert. Dieses bedeutet beispielsweise, daß bei einer höheren Geschwindigkeit V der Teilnehmerstation UE die schnelle Sendeleistungsregelung sukzessiv durch die langsame Sendeleistungsregelung ersetzt wird, da die innere Regelschleife für ein Sendeleistungsintervall Pint von null keine Sendeleistungsregelung mehr durchführen kann. Es erfolgt somit ein langsamer Übergang von der schnellen Sendeleistungsregelung zu einer langsamen Sendeleistungsregelung, wobei die Grenze für den absoluten Übergang bzw. der Punkt, in dem das Sendeleistungsintervall Pint zu null wird, beispielsweise von der Basisstation NB administriert wird. Dieser Punkt kann dabei auch abhängig von dem aktuell auf der Verbindung übertragenen Dienst oder weiteren Parametern gewählt werden.

Die äußere Regelschleife Outer Loop für die Teilnehmerstation UE ist derart verwirklicht, daß die Teilnehmerstation UE aktuell gemessene oder über ein Zeitintervall gemittelte charakteristische Werte BER bzw. BERavg zu der Basisstation NB signalisiert. Die äußere Regelschleife Outer Loop in der Basisstation NB ermittelt auf der Basis dieser Werte einen Zielwert für das Signal-Interferenz-Verhältnis Target CIR für die Teilnehmerstation UE sowie ein Sendeleistungsintervall Pint. Die Basisstation NB besitzt somit vorteilhaft eine umfassende Kontrollmöglichkeit über die Sendeleistungsregelung der von ihr versorgten Teilnehmerstationen UE. Diese Verwirklichung ermöglicht gleichzeitig eine deutliche Reduzierung der Komplexität der Teilnehmerstation UE, da beispielsweise die Berechnung der Sendeleistungsgrenzen von der zentralen Basisstation NB übernommen wird.

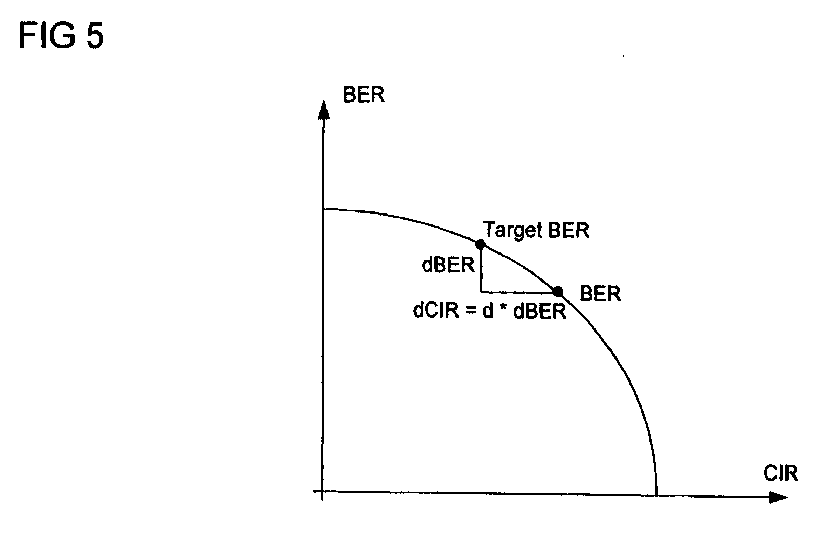

In der FIG 5 ist bezugnehmend auf die FIG 4 der Zusammenhang zwischen dem charakteristischen Wert BER und dem Signal-Interferenz-Verhältnis CIR dargestellt. Hierbei wird deutlich, daß aufgrund der Nichtlinearität des Zusammenhangs der Gewichtungsfaktor g jeweils von einem Arbeitspunkt der äußeren Regelschleife Outer Loop bzw. von dem Zielwert für den charakteristischen Wert Target BER abhängt.

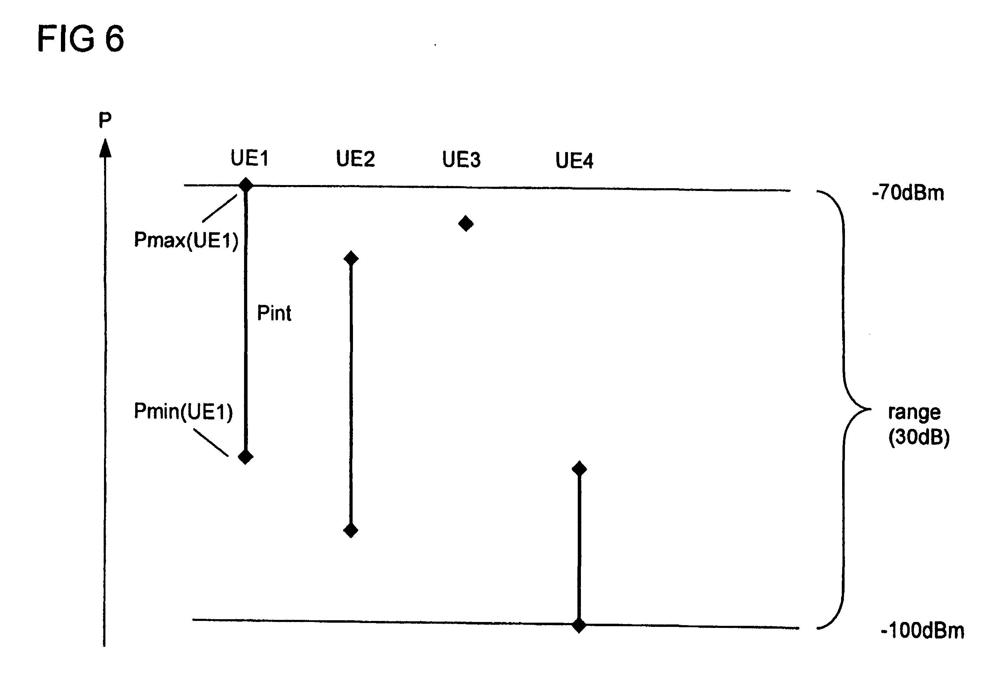

In der FIG 6 ist beispielhaft eine jeweilige Dimensionierung des Sendeleistungsintervalls Pint für Verbindungen zu mehreren Teilnehmerstationen UE1 bis UE4 dargestellt. Die Sendeleistungsintervalle Pint sind dabei derart gewählt, daß ein angenommener Dynamikbereich range der Detektoreinrichtung von 30dB nicht überschritten wird. Innerhalb dieses Dynamikbereiches range ist jeder Teilnehmerstation UE1 bis UE4 eine mittlere Sendeleistung mit einem bestimmten Sendeleitungsintervall Pint zugewiesen, das jeweils durch eine maximale Pmax und eine minimale Sendeleistung Pmax definiert wird. Die Anordnung der mittleren Sendeleistung sowie des Sendeleistungsintervalls Pint in dem Dynamikbereich range ist beispielsweise von einer Entfernung der jeweiligen Teilnehmerstation UE1 bis UE4 von der Basisstation NB bzw. von individuellen Übertragungseigenschaften aufgrund geographischer Besonderheiten am Ort der Teilnehmerstation abhängig. Die Breite des Sendeleistungsintervalls Pint ist dahingegen wie beschrieben beispielsweise von der Geschwindigkeit V der jeweiligen Teilnehmerstation UE1 bis UE4 sowie von dem übertragenen Dienstetyp abhängig. Mit beispielsweise einer steigenden Geschwindigkeit V der Teilnehmerstation wird das Sendeleistungsintervall Pint sukzessiv verkleinert, bis es, wie das Beispiel der dritten Teilnehmerstation UE3 offenbart, zu einem Punkt verringert ist. In diesem Fall erfolgt die Sendeleistungsregelung nur noch mittels der äußeren Regelschleife Outer Loop, da die innere Regelschleife Inner Loop keine Beeinflussungsmöglichkeiten der Sendeleistung mehr besitzt. Der angegebene Punkt für die Sendeleistung dieser dritten Teilnehmerstation UE3 verändert sich in dem Dynamikbereich range entsprechend einer Veränderung der mittleren Sendeleistung durch die äußere Regelschleife Outer Loop.

## Patentansprüche

1. Verfahren zur Sendeleistungsregelung in einem Funk-Kommunikationssystem, unter Verwendung einer aus einer inneren und einer äußeren Regelschleife bestehenden Regelsystems,
**dadurch gekennzeichnet,**
- **daß** die Sendeleistung einer Teilnehmerstation (UE) und/oder einer Basisstation (NB) mittels einer für eine schnelle Sendeleistungsregelung ausgebildeten inneren Regelschleife innerhalb eines, von einer für eine langsame Sendeleistungsregelung ausgebildeten äußeren Regelschleife (Outer Loop) vorgegebenen Sendeleistungsintervalls (Pint) variiert wird, und
- **daß** das Sendeleistungsinvervall (Pint) sowohl für die Aufwärtsrichtung (UL) von einer Teilnehmerstation (UE) zu einer Basisstation (NB) als auch für die Abwärtsrichtung (DL) von der Basisstation (NB) zu der Teilnehmerstation (UE) jeweils in einem Basisstationssystem (BSS) mittels der dort vorhandenen äußeren Regelschleife definiert wird.

2. Verfahren nach Anspruch 1, **dadurch gekennzeichnet, daß** das Sendeleistungsintervall (Pint) durch eine maximale Sendeleistung (Pmax) und eine minimale Sendeleistung (Pmin) definiert wird.

3. Verfahren nach Anspruch 1 oder 2,
**dadurch gekennzeichnet, daß** das Sendeleistungsintervall (Pint) individuell für die Teilnehmerstation (UE) und/oder für die Basisstation (NB) definiert wird.

4. Verfahren nach einem vorhergehenden Anspruch,
**dadurch gekennzeichnet, daß** Sendeleistungsintervalle (Pint) mehrerer Teilnehmerstationen (UE), die parallel Verbindungen in einem gleichen Frequenzband (B) und/oder in einem gleichen Zeitschlitz (ts) aufgebaut haben, derart dimensioniert werden, daß ein vorgegebener Dynamikbereich (range) einer Empfangseinrichtung der Basisstation (NB) nicht überschritten wird.

5. Verfahren nach einem vorhergehenden Anspruch,
**dadurch gekennzeichnet, daß** von der Basisstation (NB) das Sendeleistungsintervall (Pint) oder die maximale (Pmax) und die minimale Sendeleistung (Pmin) für die Signalübertragung in Aufwärtsrichtung (UL) zu der Teilnehmerstation (UE) signalisiert wird.

6. Verfahren nach einem vorhergehenden Anspruch,
**dadurch gekennzeichnet, daß** das Sendeleistungsintervall (Pint) abhängig von einem übertragenen Dienst auf der Verbindung zwischen der Basisstation (NB) und der Teilnehmerstation (NB) dimensioniert wird.

7. Verfahren nach einem vorhergehenden Anspruch,
**dadurch gekennzeichnet, daß** das Sendeleistungsintervall (Pint) abhängig von einer Geschwindigkeit (V) der Teilnehmerstation (UE) dimensioniert wird.

8. Verfahren nach einem vorhergehenden Anspruch,
**dadurch gekennzeichnet, daß** das Sendeleistungsintervall (Pint) bei einer steigenden Geschwindigkeit (V) der Teilnehmerstation (UE) sukzessiv verkleinert wird.

9. Verfahren nach Anspruch 7 oder 8,
**dadurch gekennzeichnet, daß** die Geschwindigkeit (V) der Teilnehmerstation (UE) aus Messungen bezüglich einer Variation von Übertragungseigenschaften der Funkschnittstelle geschätzt wird, wobei die Übertragungseigenschaften mittels eines charakteristischen Wertes (BER) bestimmt werden.

10. Verfahren nach dem vorhergehenden Anspruch,
**dadurch gekennzeichnet, daß** als charakteristischer Wert (BER) für die Übertragungseigenschaften eine Bitfehlerrate, eine Zeitrahmenfehlerrate, eine Pfaddämpfung und/oder eine Interferenz am Ort der Teilnehmerstation (UE) ermittelt wird.

11. Verfahren nach Anspruch 9 oder 10,
**dadurch gekennzeichnet, daß** die Variation des charakteristischen Wertes (BER) eines von der Basisstation (NB) mit einer konstanten Sendeleistung gesendeten Signalisierungskanals (BCCH) in der Teilnehmerstation (UE) ermittelt wird.

12. Verfahren nach einem der Ansprüche 9 bis 11,
**dadurch gekennzeichnet, daß** der charakteristische Wert (BER) über ein bestimmtes Zeitintervall gemittelt wird, und der gemittelte charakteristische Wert (BERavg) für die Dimensionierung des Sendeleistungsintervalls (Pint) berücksichtigt wird.

13. Verfahren nach dem vorhergehenden Anspruch,
**dadurch gekennzeichnet, daß** das Zeitintervall zur Mittelung einer Periodizität der langsamen Sendeleistungsregelung in der äußeren Regelschleife (Outer Loop) entspricht.

14. Verfahren nach einem der Ansprüche 9 bis 13,
**dadurch gekennzeichnet, daß** bei einer Unterschreitung eines vorgegebenen Schwellwertes durch die ermittelte Variation der Übertragungseigenschaften der Funkschnittstelle eine Aktualisierung der Dimensionierung des Sendeleistungsintervalls (Pint) angeregt wird.

15. Verfahren nach einem vorhergehenden Anspruch,
**dadurch gekennzeichnet, daß** das die schnelle und/oder die langsame Sendeleistungsregelung für die Aufwärts- (UL) und/oder für die Abwärtsrichtung (DL) auf einer Ermittlung eines Signal-Interferenz-Verhältnisses (CIR) basieren.

16. Verfahren nach einem der Ansprüche 9 bis 15,
**dadurch gekennzeichnet, daß** in der äußeren Regelschleife (Outer Loop) der ermittelte charakteristische Wert (BER) mit einen Zielwert für den charakteristischen Wert (Target BER) verglichen und eine Differenz (dBER) der Werte berechnet wird.

17. Verfahren nach dem vorhergehenden Anspruch,
**dadurch gekennzeichnet, daß** die Differenz (dBER) zwischen dem ermittelten charakteristischen Wert (BER) und dem Zielwert des charakteristischen Wertes (Target BER) durch einen Gewichtungsfaktor (g) gewichtet wird.

18. Verfahren nach dem vorhergehenden Anspruch,
**dadurch gekennzeichnet, daß** die gewichtete Differenz (dCIR) zu einem Zielwert eines Signal-Interferenzverhältnisses (CIR(i)) eines vorangehenden Regelintervalls (i) addiert wird, woraus der aktuelle Zielwert des Signal-Interferenzverhältnisses (Target CIR, CIR(i+1)) für das aktuelle Regelintervall (i+1) bestimmt wird.

19. Verfahren nach dem vorhergehenden Anspruch,
**dadurch gekennzeichnet, daß** die äußere Regelschleife (Outer Loop) für die Teilnehmerstation (UE) ebenfalls in der Basisstation (NB) verwirklicht wird, wobei in der äußeren Regelschleife (Outer Loop) aus einem von der Teilnehmerstation (UE) ermittelten und zu der Basisstation (NB) signalisierten aktuellen charakteristischen Wert (BER) ein jeweils aktueller Zielwert des Signal-Interferenzverhältnisses (Target CIR) erzeugt und zu der Teilnehmerstation (UE) signalisiert wird.

20. Verfahren nach einem vorhergehenden Anspruch,
**dadurch gekennzeichnet, daß** das Funk-Kommunikationssystem ein TDD-Übertragungsverfahren unterstützt.

21. Verfahren nach einem der Ansprüche 1 bis 19,
**dadurch gekennzeichnet, daß** das Funk-Kommunikationssystem ein FDD-Übertragungsverfahren unterstützt.

## Claims

1. Method for controlling the transmitting power in a radio communications system by using a control system consisting of an inner control loop and an outer control loop, **characterized in that**
- the transmitting power of a subscriber station (UE) and/or a base station (NB) is varied by means of an inner control loop constructed for fast transmitting power control within a transmitting power interval (Pint) predetermined by an outer control loop constructed for slow transmitting power control, and **in that**
- the transmitting power interval (pᵢₙₜ) is in each case defined in a base station system (BSS) by means of the outer control loop, which exists there, both for the uplink (UL) from a subscriber station (UE) to a base station (NB) and for the downlink (DL) from the base station (NB) to the subscriber station (UE).

2. Method according to Claim 1, **characterized in that** the transmitting power interval (Pint) is defined by a maximum transmitting power (Pmax) and a minimum transmitting power (Pmin).

3. Method according to Claim 1 or 2, **characterized in that** the transmitting power interval (Pint) is defined individually for the subscriber station (UE) and/or for the base station (NB).

4. Method according to a preceding claim, **characterized in that** transmitting power intervals (Pint) of a number of subscriber stations (UE) which have set up connections in parallel in the same frequency band (B) and/or in the same timeslot (ts), are dimensioned in such a manner that a predetermined dynamic range of a receiving device of the base station (NB) is not exceeded.

5. Method according to a preceding claim, **characterized in that** the base station (NB) signals to the subscriber station (UE) the transmitting power interval (Pint) or the maximum transmitting power (Pmax) and the minimum transmitting power (Pmin) for the signal transmission in the uplink (UL).

6. Method according to a preceding claim, **characterized in that** the transmitting power interval (Pint) is dimensioned in dependence on a service transmitted over the link between the base station (NB) and the subscriber station (NB).

7. Method according to a preceding claim, **characterized in that** the transmitting power interval (Pint) is dimensioned in dependence on a speed (V) of the subscriber station (UE).

8. Method according to a preceding claim, **characterized in that** the transmitting power interval (Pint) is progressively reduced with increasing speed (V) of the subscriber station (UE).

9. Method according to Claim 7 or 8, **characterized in that** the speed (V) of the subscriber station (UE) is estimated from measurements with respect to a variation of transmission characteristics of the radio interface, the transmission characteristics being determined by means of a characteristic value (BER).

10. Method according to the preceding claim, **characterized in that** a bit error rate, a time frame error rate, a path attenuation and/or an interference at the location of the subscriber station (UE) is determined as the characteristic value (BER) for the transmission characteristics.

11. Method according to Claim 9 or 10, **characterized in that** the variation of the characteristic value (BER) of a signalling channel (BCCH) transmitted with constant transmitting power by the base station (NB) is determined in the subscriber station (UE).

12. Method according to one of Claims 9 to 11, **characterized in that** the characteristic value (BER) is averaged over a particular time interval and the averaged characteristic value (BERavg) is taken into consideration for the dimensioning of the transmitting power interval (Pint).

13. Method according to the preceding claim, **characterized in that** the time interval for averaging corresponds to a periodicity of the slow transmitting power control in the outer control loop.

14. Method according to one of Claims 9 to 13, **characterized in that** an updating of the dimensioning of the transmitting power interval (Pint) is initiated when the variation of the transmission characteristics of the radio interface determined drops below a predetermined threshold value.

15. Method according to a preceding claim, **characterized in that** the fast and/or slow transmitting power control for the uplink (UL) and/or for the downlink (DL) are based on the determination of a carrier/interference ratio (CIR).

16. Method according to one of Claims 9 to 15, **characterized in that** the characteristic value (BER) determined is compared with a target BER in the outer control loop and a difference (dBER) between the values is calculated.

17. Method according to the preceding claim, **characterized in that** the difference (dBER) between the characteristic value (BER) determined and the target BER is weighted by a weighting factor (g).

18. Method according to the preceding claim, **characterized in that** the weighted difference (dCIR) is added to a target CIR(i) of a preceding control interval (i) from which the current target CIR, CIR(i+1) for the current control interval (i+1) is determined.

19. Method according to the preceding claim, **characterized in that** the outer control loop for the subscriber station (UE) is also implemented in the base station (NB), in which arrangement an in each case current target CIR is generated in the outer control loop from a current characteristic value (BER) determined by the subscriber station (UE) and signalled to the base station (NB), and is signalled to the subscriber station (UE).

20. Method according to a preceding claim, **characterized in that** the radio communications system supports a TDD transmission method.

21. Method according to one of Claims 1 to 19, **characterized in that** the radio communications system supports an FDD transmission method.

## Revendications

1. Procédé de régulation de la puissance d'émission dans un système de radiocommunication au moyen d'un système de régulation composé d'une boucle de régulation intérieure et d'une boucle de régulation extérieure, **caractérisé en ce que**
- on varie la puissance d'émission d'une station d'abonné (UE) et/ou d'une station de base (NB) au moyen d'une boucle de régulation intérieure conçue pour une régulation rapide de la puissance d'émission, à l'intérieur d'un intervalle de puissance d'émission (Pint) défini à l'avance par une boucle de régulation extérieure (Outer Loop) conçue pour une régulation lente de la puissance d'émission, et **en ce que**
- on définit l'intervalle de puissance d'émission (Pint) tant pour le sens ascendant (UL) depuis une station d'abonné (UE) vers une station de base (NB) que pour le sens descendant (DL) depuis la station de base (NB) vers la station d'abonné (UE) à chaque fois dans un système de station de base (BSS) au moyen de la boucle de régulation extérieure prévue à cet endroit.

2. Procédé selon la revendication 1, **caractérisé en ce qu'**on définit l'intervalle de puissance d'émission (Pint) par une puissance d'émission maximale (Pmax) et une puissance d'émission minimale (Pmin).

3. Procédé selon la revendication 1 ou 2, **caractérisé en ce qu'**on définit individuellement l'intervalle de puissance d'émission (Pint) pour la station d'abonné (UE) et/ou pour la station de base (NB).

4. Procédé selon une revendication précédente, **caractérisé en ce qu'**on dimensionne les intervalles de puissance d'émission (Pint) de plusieurs stations d'abonnés (UE) ayant établi parallèlement des connexions dans une même bande de fréquences (B) et/ou dans un même créneau temporel (ts) de manière à ce qu'une gamme dynamique (range) définie à l'avance d'un dispositif de réception de la station de base (NB) ne soit pas dépassée.

5. Procédé selon une revendication précédente, **caractérisé en ce que** l'intervalle de puissance d'émission (Pint) ou la puissance d'émission maximale (Pmax) et minimale (Pmin) pour la transmission de signaux est transmise depuis la station de base (NB) dans le sens ascendant (UL) vers la station d'abonné (UE).

6. Procédé selon une revendication précédente, **caractérisé en ce qu'**on dimensionne l'intervalle de puissance d'émission (Pint) en fonction d'un service transmis sur la connexion entre la station de base (NB) et la station d'abonné (NB).

7. Procédé selon une revendication précédente, **caractérisé en ce qu'**on dimensionne l'intervalle de puissance d'émission (Pint) en fonction d'une vitesse (V) de la station d'abonné (NB).

8. Procédé selon une revendication précédente, **caractérisé en ce qu'**on réduit successivement l'intervalle de puissance d'émission (Pint) lorsque la vitesse (V) de la station d'abonné (UE) augmente.

9. Procédé selon la revendication 7 ou 8, **caractérisé en ce qu'**on estime la vitesse (V) de la station d'abonné (UE) à partir de mesures par rapport à une variation de propriétés de transmission de l'interface radio, lesdites propriétés de transmission étant déterminées au moyen d'une valeur caractéristique (BER).

10. Procédé selon la revendication précédente, **caractérisé en ce qu'**on détermine comme valeur caractéristique (BER) des propriétés de transmission un taux d'erreur sur les bits, un taux d'erreur sur les trames, un affaiblissement de voie et/ou une interférence au lieu de la station d'abonné (UE).

11. Procédé selon la revendication 9 ou 10, **caractérisé en ce qu'**on détermine la variation de la valeur caractéristique (BER) d'un canal de signalisation (BCCH) émis par la station de base (NB) avec une puissance d'émission constante dans la station d'abonné (UE).

12. Procédé selon l'une des revendications 9 à 11, **caractérisé en ce qu'**on calcule la moyenne de la valeur caractéristique (BER) sur un intervalle de temps déterminé et **en ce qu'**on tient compte de la valeur caractéristique moyenne (BERavg) pour le dimensionnement de l'intervalle de puissance d'émission (Pint).

13. Procédé selon la revendication précédente, **caractérisé en ce que** l'intervalle de temps pour calculer la moyenne d'une périodicité correspond à la régulation lente de la puissance d'émission dans la boucle de régulation extérieure (Outer Loop).

14. Procédé selon l'une des revendications 9 à 13, **caractérisé en ce que** dans le cas où la variation déterminée des caractéristiques de transmission de l'interface radio serait inférieure à une valeur seuil définie à l'avance, une actualisation du dimensionnement de l'intervalle de puissance d'émission (Pint) sera initiée.

15. Procédé selon une revendication précédente, **caractérisé en ce que** la régulation rapide et/ou la régulation lente de la puissance d'émission pour le sens ascendant (UL) et/ou le sens descendant (DL) sont basées sur une détermination d'un rapport signal/interférence (CIR).

16. Procédé selon l'une des revendications 9 à 15, **caractérisé en ce qu'**on compare dans la boucle de régulation extérieure (Outer Loop) la valeur caractéristique déterminée (BER) avec une valeur cible de la valeur caractéristique (Target BER) et on calcule une différence (dBER) desdites valeurs.

17. Procédé selon la revendication précédente, **caractérisé en ce que** la différence (dBER) entre la valeur caractéristique déterminée (BER) et la valeur cible de la valeur caractéristique (Target BER) est pondérée par un facteur de pondération (g).

18. Procédé selon la revendication précédente, **caractérisé en ce qu'**on additionne la différence pondérée (dCIR) à une valeur cible d'un rapport signal/interférence (CIR (i) ) d'un précédent intervalle de régulation (i) pour en déterminer la valeur cible actuelle du rapport signal/interférence (Target CIR, CIR (i+1) ) pour l'intervalle de régulation actuel (i+1).

19. Procédé selon la revendication précédente, **caractérisé en ce qu'**on réalise la boucle de régulation extérieure (Outer Loop) pour la station d'abonné (UE) également dans la station de base (NB), dans ladite boucle de régulation extérieure (Outer Loop), étant générée à partir d'une valeur caractéristique actuelle (BER) déterminée par la station d'abonné (UE) et transmise vers la station de base (NB) une valeur cible à chaque fois actuelle du rapport signal/interférence (Target CIR), qui est transmise vers la station d'abonné (UE).

20. Procédé selon une revendication précédente, **caractérisé en ce que** le système de radiocommunication supporte un procédé de transmission TDD.

21. Procédé selon l'une des revendications 1 à 19, **caractérisé en ce que** le système de radiocommunication supporte un procédé de transmission FDD.
